# EUROPEAN PATENT APPLICATION

(11) **EP 1 911 515 A1**
(43) Date of publication of application: **16.04.2008**
(21) Application number: 06020709.9
(22) Date of filing: 02.10.2006
(51) Int. Cl.: B01J 31/04, B01J 31/02, C07F 7/00, C07C 2/30

(54) **Method for preparing a transition metal ester compound**

(71) Applicant: Saudi Basic Industries Corporation Inc., 11422 Riyadh (SA); Linde AG, 65189 Wiesbaden (DE)
(72) Inventor: Bölt, Heinz, 82515 Wolfratshausen (DE); Fritz, Peter M., 82008 Unterhaching (DE); Müller, Wolfgang, 81245 München (DE); Winkler, Florian, 80469 München (DE); Mosa, Fuad, 11551 Riyadh (SA); Al-Hazmi, Mohammed, 11422 Riyadh (SA); Ederer, Thomas, Dr., 84539 Zangberg (DE); Knott, Thomas, Dr., 84453 Mühldorf am Inn (DE)
(74) Representative: Winkler, Andreas Fritz Ernst

(57) **Abstract**

The present invention relates to a method for preparing a transition metal compound having the formula MX₄ according to the following scheme:

MHal₄+4HX+Base → MX₄+4HHal•Base,

wherein Hal is halide, X is OCOR or OSO₃R', wherein R and R' are independently, substituted or unsubstituted, alkyl, alkene or phenyl, and base is an organic base.

## Description

The present invention relates to a method for preparing a transition metal compound having the formula MX₄ with M = transition metal and X = OCOR or OSO₃R', wherein R and R' are independently, substituted or unsubstituted, alkyl, alkene or phenyl.

A method for the preparation of a transition metal compound suitable as catalyst for the oligomerisation of ethylene is already known in the prior art. DE 43 38 416 C1 discloses a method wherein transition metal chloride is reacted with HX (X as defined above) under reflux. The reaction is kept under full reflux at boiling temperature until the HCl formation is finished.

In practice it was found that it may take about two weeks until HCI formation is finished. From J. Ludwig, D. Schwartz, Inorganic Chemistry, Vol. 9, No. 3, March 1970, page 607-64, it is known that the replacement of the last (4^{th}) halide of the transition metal halide is very complicated.

It is therefore an object of the present invention to overcome the drawbacks of the prior art, especially to provide a method for preparing a transition metal compound having the formula MX₄, wherein the reaction time can be significantly reduced to safe time and preparation costs.

This object is achieved by a method for preparing a transition metal compound having the formula MX₄ according to the following scheme:

MHal₄+4HX+Base → MX₄+4HHa1•Base,

wherein Hal is halide, X is OCOR or OSO₃R', wherein R and R' are independently, substituted or unsubstituted, alkyl, alkene or phenyl, and base is an organic base.

Preferably, wherein M is selected from zirconium, titanium and hafnium, preferably zirconium.

Even preferred, Hal is chloride.

In one embodiment the base is NR"₃, wherein R" is independently selected from alkyl, aryl and cycloalkyl, preferably having 1 to 20 carbons for alkyl, 6 to 15 carbons for aryl and 3 to 15 carbons for cycloalkyl, or tertiary cyclic amine.

Preferably, the product HHal•Base is removed by filtration and/or decantation.

Finally, it is preferred that the base is added in stoichiometric amounts at the beginning or during the reaction. In this regard, it has been found that substitution of the first three halides of the metal halide compound by X is relatively fast, however, the substitution of the last halide takes considerably long without the addition of the base. Thus, especially for the step of substituting also the last halide the addition of the base is helpful, thus the addition of the base may also during the reaction at a later stage.

Surprisingly it was found that by the addition of an organic base, such as R"₃N a significant reduction of the reaction time may be achieved, from two weeks for the method of the prior art to only a few days utilizing the method according to the present invention. By addition of an organic base, a solid HCl salt is achieved which may be preferably removed by filtration. The equilibrium of the reaction may be shifted towards the desired product.

Most preferably, the transition metal is zirconium and the halide is chloride. Further, NR"₃ may be preferably selected as organic base.

The amount of the organic base added to the reaction is equimolar to the amount of HCl produced.

Additional advantages and features of the present invention will become apparent from the following detailed description of an example of the inventive method.

At room temperature zirconium tetrachloride is suspended in toluene in the absence of air and moisture and heated to reflux. Subsequently, iso-butyric acid and triethyl amine are added and the reaction is heated under reflux. After the zirconium tetrachloride has been dissolved completely, the reaction is heated under reflux until the HCl formation is finished. During the reaction the formation of a solid can be observed. The HCl formation is finished three days after start of the reaction. The solid obtained (HCl-salt) can be easily removed by filtration. The solution obtained can be employed without any further treatment for the oligomerization of ethylene.

It is important that the base is reacted completely, as an excess of the base inhibits the catalyst activity significantly.

The features disclosed in the foregoing description and in the claims may, both separately and in any combination thereof, be material for realizing the invention in diverse forms thereof.

## Claims

1. Method for preparing a transition metal compound having the formula MX₄ according to the following scheme:
MHal₄+4HX+Base → MX₄+4HHal•Base,
wherein Hal is halide, X is OCOR or OSO₃R', wherein R and R' are independently, substituted or unsubstituted, alkyl, alkene or phenyl, and base is an organic base.

2. Method according to claim 1, wherein M is selected from zirconium, titanium and hafnium, preferably zirconium.

3. Method according to claim 1 or 2, wherein Hal is chloride.

4. Method according to any of the preceding claims, wherein the base is NR"₃, wherein R" is independently selected from alkyl, aryl and cycloalkyl, preferably having 1 to 20 carbons for alkyl, 6 to 15 carbons for aryl and 3 to 15 carbons for cycloalkyl, or tertiary cyclic amine.

5. Method according to any of the preceding claims, wherein the product HHal•Base is removed by filtration and/or decantation.

6. Method according to any of the preceding claims, wherein the base is added in stoichiometric amounts at the beginning or during the reaction.
